# EUROPÄISCHE PATENTSCHRIFT

(11) **EP 1 320 669 B1**
(45) Veröffentlichungstag und Bekanntmachung des Hinweises auf die Patenterteilung: **30.08.2006**
(21) Anmeldenummer: 01978303.4
(22) Anmeldetag: 24.08.2001
(51) Int. Cl.: F01P 7/16

(54) **VERFAHREN ZUR KÜHLMITTELTEMPERATURREGELUNG UND KÜHLMITTELBETRIEBENE MOTORKÜHLUNG**
METHOD FOR REGULATING COOLANT TEMPERATURE AND A COOLANT-OPERATED ENGINE COOLING SYSTEM
PROCEDE POUR REGULER LA TEMPERATURE D'UN AGENT REFRIGERANT ET SYSTEME DE REFROIDISSEMENT DE MOTEUR ACTIONNE PAR AGENT REFRIGERANT

(30) Priorität: 15.09.2000 DE 10045613
(43) Veröffentlichungstag der Anmeldung: 25.06.2003
(73) Patentinhaber: Volkswagen Aktiengesellschaft, 38436 Wolfsburg (DE)
(72) Erfinder: STIEBELS, Bernd, 38528 Adenbüttel (DE); GÖRNER, Steffen, 38154 Königslutter (DE)
(74) Vertreter: Schneider, Henry
(86) Internationale Anmeldenummer: PCT/EP2001/009793
(87) Internationale Veröffentlichungsnummer: WO 2002/023022

(56) Entgegenhaltungen:
- EP-A- 0 887 526
- DE-A- 19 951 362
- US-A- 4 667 630
- US-A- 4 964 371

## Beschreibung

Die Erfindung betrifft ein Verfahren zur Kühlmitteltemperaturregelung einer Motorkühlung für eine direkteinspritzende Verbrennungskraftmaschine sowie eine kühlmittelbetriebene Motorkühlung für eine direkteinspritzende Verbrennungskraftmaschine.

Die betriebspunktabhängige Regelung der Kühlmitteltemperatur wird heute bei konventionellen Ottomotoren mit Saugrohreinspritzung und λ=1-Betrieb bei niedrigen Lasten als Maßnahme zur Verbrauchssenkung eingesetzt. Die Absenkung des Kraftstoffverbrauchs wird dabei im Wesentlichen durch eine reduzierte Reibung zwischen ölgeschmierter Kolbengruppe und Zylinderlaufbahn verursacht, da die Temperatur des Ölwandfilms durch die angehobene Kühlmitteltemperatur mit angehoben wird. Bei höheren Lasten sowie bei hohen Außentemperaturen ist die Anhebung der Kühlmitteltemperatur jedoch eingeschränkt beziehungsweise die Kühlmitteltemperatur muss sogar teils abgesenkt werden, um eine Klopfneigung des Motors zu reduzieren. Ebenso kann erst durch eine gezielte Absenkung der Kühlmitteltemperatur bei hohen Lasten eine maximale Leistung des Motors abgerufen werden. Die Kühlmitteltemperaturregelung bei konventionellen Ottomotoren mit Saugrohreinspritzung wird üblicherweise kennfeldorientiert durchgeführt.

Für magerlauffähige Ottomotoren mit Direkteinspritzung beschreibt EP 0 887 526 A eine Regelung der Kühlmitteltemperatur in Abhängigkeit von einer Betriebsart des Motors vorzunehmen, das heißt abhängig von einem Homogenbetrieb und einem Schichtladebetrieb. Die Betriebsart wiederum wird auf Basis einer aktuellen Motorlast bestimmt.

US 4,667,630 beschreibt für direkteinspritzende Ottomotoren, eine Ölfilmkühlung des Kolbens vorzunehmen, wobei ein Ölfluss abhängig von der Motorlast derart eingestellt wird, dass eine für alle Lastbereiche konstante optimale Temperatur aufrecht erhalten wird.

Aufgabe der vorliegenden Erfindung ist es, eine möglichst effektive Kühlmitteltemperaturregelung für direkteinspritzende Verbrennungskraftmaschinen bereitzustellen. Dies erfordert eine gezielte Auswahl der während des Regelvorgangs zu bewertenden Parameter sowie eine entsprechende Anpassung der zur Realisierung der Regelung notwendigen Mittel. Eine einfache Übertragung der für konventionelle Ottomotoren gefundenen Lösungen ist aufgrund der sehr viel komplexeren Betriebssteuerung der direkteinspritzenden Verbrennungskraftmaschine nicht möglich.

Erfindungsgemäß wird diese Aufgabe durch das Verfahren zur Kühlmitteltemperaturregelung der Motorkühlung für direkteinspritzende Verbrennungskraftmaschinen mit den im Anspruch 1 genannten Merkmalen sowie die Verbrennungskraftmaschine mit kühlmittelbetriebener Motorkühlung mit den im Anspruch 12 genannten Merkmalen gelöst. Nach dem Verfahren wird die Kühlmitteltemperatur in Abhängigkeit von einer Last und/oder einer Drehzahl der Verbrennungskraftmaschine derart geregelt, dass in Teillastphasen mit niedriger Last und/oder mit niedrigen Drehzahlen die Kühlmitteltemperatur auf Werte von ≥ 102°C angehoben wird. Die Motorkühlung umfasst hierzu eine Steuereinheit, mit der eine solche Kühlmitteltemperaturregelung durchführbar ist. Durch die Wahl der Parameter Last und Drehzahl kann in einfacher Weise eine hohe und zuverlässige Regelung der Kühlmitteltemperatur unter dem Gesichtspunkt einer Verbrauchsoptimierung erfolgen.

Vorzugsweise liegen die Kühlmitteltemperaturen in den Teillastphasen bei Werten von insbesondere ≥ 105 °C, besonders bevorzugt ≥ 108 °C. Durch die Anhebung der Kühlmitteltemperatur um teils mehr als 20 K lässt sich ein Verbrauchsvorteil von mehr als 2 % realisieren.

Weiterhin ist bevorzugt, die Kühlmitteltemperatur zusätzlich in Abhängigkeit von einem Temperaturprofil einer Abgasreinigungsanlage zu regeln. Das Temperaturprofil der Abgasreinigungsanlage umfasst dabei die Temperaturen von Abgas, Katalysatoren, Schadstoffspeichern, Sensoren und dergleichen, die zur Emissionsminderung im Abgasstrang der Verbrennungskraftmaschine angeordnet sind. Zur Optimierung der Emissionsminderung ist es notwendig, die genannten Komponenten unter jeweils spezifischen Betriebstemperaturen zu betreiben. Insbesondere die Anordnung eines NOₓ₋Speicherkatalysators im Abgasstrang der Verbrennungskraftmaschinen erfordert ein aufwendiges Temperaturmanagement, um die Funktionalität eines solchen Katalysators dauerhaft aufrecht zu erhalten. Steigen die Temperaturen in der Abgasreinigungsanlage, so droht unter Umständen eine thermische Schädigung einzelner Komponenten. Entsprechend muss die Kühlmitteltemperatur erniedrigt werden, auch wenn Teillastphasen eine Anhebung erlauben würden.

Ferner ist in einer weiteren bevorzugten Ausgestaltung des Verfahrens vorgesehen, dass die Kühlmitteltemperatur zusätzlich in Abhängigkeit von einer Umgebungstemperatur geregelt wird. Bei hohen Umgebungstemperaturen, insbesondere Temperaturen ≥ 30°C, wird die Kühlmitteltemperatur gesenkt. Insgesamt soll auf diese Weise die Klopfneigung der Verbrennungskraftmaschine möglichst gering gehalten werden.

In einer weiteren bevorzugten Ausgestaltung des Verfahrens wird die Kühlmitteltemperatur zusätzlich in Abhängigkeit von einer Betriebsart der Verbrennungskraftmaschine geregelt. Wenn die Verbrennungskraftmaschine magerlauffähig ist und die Betriebsarten der Verbrennungskraftmaschine einen Homogenbetrieb und einen Schichtladebetrieb umfassen, so hat es sich als vorteilhaft erwiesen, die Kühlmitteltemperatur besonders im Schichtladebetrieb zu erhöhen. Der Schichtladebetrieb ist nur bei niedrigen Drehzahlen und Lasten sinnvoll. Aufgrund der geänderten Schwerpunktlage der Verbrennung und der höheren Zylinderfühlung durch Entdrosselung liegt ein Reibungsniveau im Schichtladebetrieb höher als im Homogenbetrieb mit gleicher Drehzahl und Last. Im Allgemeinen resultieren aus der starken Entdrosselung auch niedrigere Brennraumtemperaturen, so dass es zu einer überproportionalen Abkühlung des Ölfilms auf der Zylinderlaufbahn kommt. Durch eine Anhebung der Kühlmitteltemperatur und damit der Temperatur des Ölfilms kann die Reibung im Schichtladebetrieb im Vergleich zum homogenen Betrieb überproportionäl reduziert werden. So sind Verbrauchsvorteile von bis zu 6 % durch eine Temperaturanhebung des Kühlmittels um zirka 20 K erzielbar. Erst mit steigender Last und Drehzahlen nähert sich der Schichtladebetrieb immer mehr dem homogenen Betrieb an, so dass auch der Verbrauchsvorteil auf ähnlichem Niveau liegt.

Der Einfluss der für die Kühlmitteltemperaturregelung zu berücksichtigenden Parameter kann vorzugsweise anhand eines Kennfeldes ermittelt werden. Die in das Kennfeld einfließenden Parameter umfassen dabei Betriebsart und Drehzahl der Verbrennungskraftmaschine, Last, Temperaturprofil der Abgasreinigungsanlage und die Umgebungstemperatur. Insgesamt ist es damit möglich, sowohl verbrauchs- als auch emissionsrelevante Aspekte in die Kühlmitteltemperaturregelung mit einfließen zu lassen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Anordnung einer direkteinspritzenden Verbrennungskraftmaschine mit einer regelbaren Motorkühlung und einer Abgasreinigungsanlage;
- Figur 2: ein Blockschaltbild zur Ermittlung einer Sollvorgabe für eine Kühlmitteltemperaturregelung der Motorkühlung;
- Figur 3: eine Lage eines Schichtlade- und Homogenbetriebs in Abhängigkeit von Last und Drehzahl;
- Figur 4: den spezifischen Verbrauch im Schichtlade- und Homogenbetrieb in Abhängigkeit von der Last und
- Figur 5: einen prozentualen Verbrauchsvorteil bei höheren Kühlmitteltemperaturen im Schichtlade- und Homogenbetrieb.

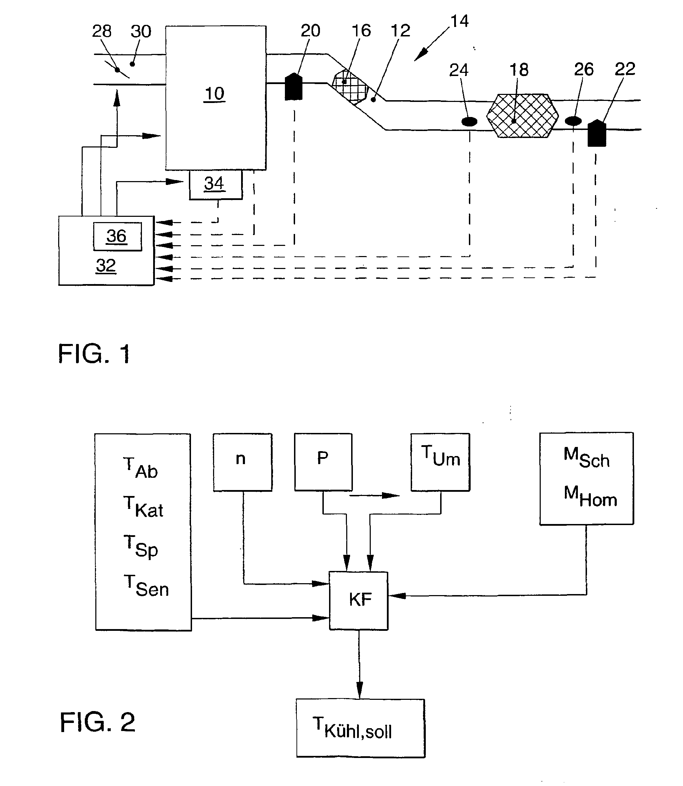

Die Figur 1 zeigt eine magerlauffähige und direkteinspritzende Verbrennungskraftmaschine 10, in deren Abgasstrang 12 eine Abgasreinigungsanlage 14 angeordnet ist. Die Abgasreinigungsanlage 14 umfasst dabei Komponenten wie einen Vorkatalysator 16 und einen NOₓ-Speicherkatalysator 18 sowie eine Sensorik zur Erfassung von spezifischen Betriebsparametern, insbesondere einer Abgaszusammensetzung, einer Abgastemperatur und Konzentrationen ausgesuchter Schadstoffe. Dazu sind hier exemplarisch die Lambdasonden 20, 22 und Temperaturfühler 24, 26 aufgeführt. Anstelle der Lambdasonde 22 kann auch ein NOₓ₋Sensor mit Lambdasonden-Funktion Einsatz finden. Um eine möglichst effektive Minderung der Schadstoffemissionen der Verbrennungskraftmaschine 10 durch die Komponenten der Abgasreinigungsanlage 14 zu ermöglichen, ist es notwendig, bestimmte Betriebstemperaturbereiche einzuhalten. So ist eine ausreichend hohe katalytische Aktivität der Katalysatoren 16, 18 nur in einem bestimmten Temperaturfenster gewährleistet. Ebenso sind für die Ad- und Desorption von Schadstoffen im NOₓ-Speicherkatalysator 18 Temperaturvorgaben zu berücksichtigen. Darüber hinaus soll eine thermische Schädigung der Komponenten der Abgasreinigungsanlage 14, insbesondere des NOₓ-Speicherkatalysators 18, durch zu hohe Abgastemperaturen verhindert werden. Verfahren zur Erfassung und Regelung der Temperaturen in der Abgasreinigungsanlage 14 sind bekannt und werden daher an dieser Stelle nicht näher erläutert. Festzuhalten ist lediglich, dass mit Hilfe der Sensorik Abgastemperaturen T_{Ab} in ausgewählten Bereichen des Abgasstranges 12, Katalysatortemperaturen Tₖₐₜ, Temperaturen der Speicherkomponenten T_{Sp} und Temperaturen der Sensoren erfasst werden können. Diese charakteristischen Temperaturen werden nachfolgend als Temperaturprofil der Abgasreinigungsanlage 14 bezeichnet.

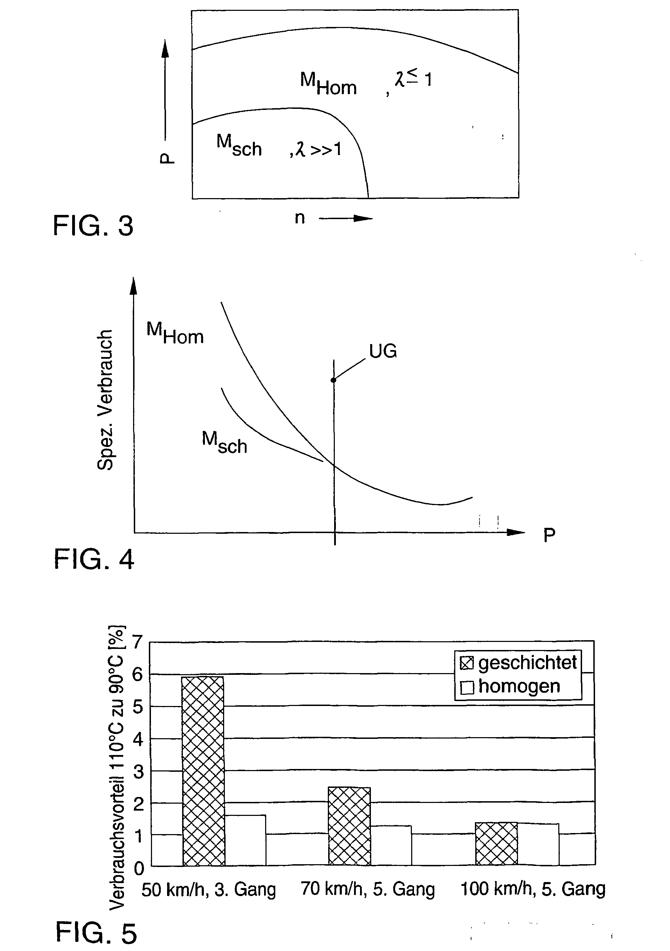

Der Verbrennungskraftmaschine 10 sind ferner Stellmittel zugeordnet, die es erlauben, einen Verbrennungsvorgang zu beeinflussen. Diese Stellmittel umfassen unter anderem eine Drosselklappe 28 in einem Ansaugkanal 30 sowie ein hier nicht dargestelltes Einspritzsystem, mit dem Einspritzmengen, Einspritzwinkel und Einspritzdauer variiert werden können. Das Einspritzsystem ermöglicht ferner eine Beeinflussung der Betriebsart der Verbrennungskraftmaschine 10, das heißt, die Verbrennungskraftmaschine 10 kann wahlweise im Homogenbetrieb M_{Hom} oder im Schichtladebetrieb M_{Sch} betrieben werden. Ein Kennfeld, mit dem bestimmt werden kann, welche Betriebsart jeweils zu wählen ist, ist der Figur 3 zu entnehmen. Ist eine Last p und eine Drehzahl n der Verbrennungskraftmaschine 10 niedrig, so hat es sich als vorteilhaft erwiesen, den Schichtladebetrieb M_{Sch} aufzunehmen. Einhergehend damit wird ein sehr mageres Luft-Kraftstoff-Gemisch mit Lambda deutlich größer 1 vorgegeben. Beim Schichtladebetrieb M_{Sch} wird lediglich ein zündfähiges Gemisch im Bereich der Zündquelle bereitgestellt (heterogene Gemischverteilung). Es hat sich jedoch gezeigt, dass ein Wirkungsgrad des Schichtladebetriebs M_{Sch} in den Teillastphasen günstiger als bei einer homogenen Gemischverteilung ist. Neben der Verbrauchsabsenkung wird auch eine Brennraumtemperatur erniedrigt und einhergehend auch ein Ölfilm zwischen Zylinderlaufbahn und Kolbengruppen abgekühlt. Mit sinkender Temperatur wird die Viskosität des Ölfilms allerdings dahingehend beeinflusst, dass ein Reibwiderstand bei der Bewegung des Kolbens im Zylinder erhöht ist. Dies kann unter Umständen dazu führen, dass in diesem Kennfeld vorhandene große Verbrauchseinsparpotentiale teilweise wieder geschmälert werden. Die erfindungsgemäße Kühlmitteltemperaturregelung soll unter anderem diese Nachteile mindern. Ein Einsparpotential des Schichtladebetriebs M_{Sch} gegenüber dem Homogenbetrieb M_{Hom} lässt sich der Figur 4, in der ein spezifischer Verbrauch der Verbrennungskraftmaschine 10 in Abhängigkeit von der Last p dargestellt ist, entnehmen. Deutlich wird, dass erst ab einer Umschaltgrenze UG ein Wechsel in den Homogenbetrieb M_{Hom} zu erfolgen hat. Dies liegt vor allen Dingen daran, dass hohe Lasten und Maximallasten nur im Homogenbetrieb M_{Hom} erreicht werden können.

Die Betriebsartenregelung der Verbrennungskraftmaschine 10 und die Regelung des Temperaturprofils der Abgasreinigungsanlage 14 lassen sich zweckmäßigerweise mit einem Motorsteuergerät 32 koordinieren. Der Verbrennungskraftmaschine 10 ist weiterhin eine Motorkühlung 34 zugeordnet, mit der mittelbar über die Kühlmitteltemperatur eine Temperatur des Ölfilms zwischen Kolben und Zylinder regelbar ist. Mittel zur Beeinflussung der Kühlmitteltemperatur, wie beispielsweise regelbare Wärmeaustauscher und Gebläse, sind bekannt. Ebenso ist es bekannt, die Kühlmitteltemperatur mit geeigneten Temperaturfühlern zu erfassen und zu regeln. Als Regel- und/oder Steuergrößen, die den Betrieb der Motorkühlung in herkömmlicher Weise beeinflussen können, kommen insbesondere eine Öltemperatur, ein Mittelwert für die Zündwinkelspätverstellung der Klopfregelung und eine Heizleistungsanforderung von Climatronic beziehungsweise Heizungen in Frage. Die erfindungsgemäße betriebspunktabhängige Kühlmitteltemperaturregelung erfolgt mit einer der Motorkühlung 34 zugeordneten Steuereinheit 36. Dabei kann die Steuereinheit 36, wie hier dargestellt, in das Motorsteuergerät 32 integriert werden oder als selbstständige Einheit realisiert werden. In der Steuereinheit 36 ist ein geeigneter Algorithmus zur Kühlmitteltemperaturregelung in digitalisierter Form hinterlegt.

Die Figur 2 zeigt in einem schematischen Blockschaltbild, wie die Ermittlung der Sollvorgabe, nämlich einer Solltemperatur des Kühlmittels T_{Kühl,soll}, durchführbar ist. Dazu werden zunächst die Drehzahl n und die Last p erfasst, in der Steuereinheit 36 bereitgestellt und anhand eines Kennfeldes KF bewertet. Zusätzlich werden die emissionsrelevanten Parameter der Abgasreinigungsanlage 14 sowie die momentane Betriebsart der Verbrennungskraftmaschine 10 in dem Kennfeld KF berücksichtigt. Darüber hinaus hat es sich als sinnvoll erwiesen, eine Umgebungstemperatur T_{Um} als weiteren Parameter mit aufzunehmen. Das Kennfeld KF liefert dann die Solltemperatur T_{Kühl,soll} für das Kühlmittel der Motorkühlung 34. Eine Tendenz der Kühlmitteltemperaturregelung wird in einigen Fallkonstellationen nachfolgend erläutert.

Die Kühlmitteltemperatur wird in Phasen niedriger Last p und/oder niedriger Drehzahlen n (Teillastphasen) üblicherweise angehoben und zwar auf Werte von ≥ 102 °C, insbesondere ≥ 105 °C und besonders bevorzugt ≥ 108 °C. Liegen sehr hohe oder gar eine maximale Lastanforderung vor, so muss zu deren Umsetzung die Kühlmitteltemperatur gesenkt werden. Üblicherweise wird zur Verbrauchsoptimierung in den Teillastphasen der Schichtladebetrieb M_{Sch} aufgenommen. Mit Aufnahme des Schichtladebetriebes M_{Sch} senkt sich, wie bereits erläutert, die Brennraumtemperatur. Zur Vermeidung der Reibungsverluste wird daher die Kühlmitteltemperatur im Schichtladebetrieb M_{Sch} mit gleicher Tendenz wie in den Teillastphasen angehoben (Teillastphasen und Phasen mit Schichtladebetrieb decken sich weitestgehend).

Da die Kühlmitteltemperatur in gewissem Maße auch die Abgastemperatur beeinflusst, hat auch das aktuelle Temperaturprofil der Abgasreinigungsanlage 14 Einfluss auf Tendenz und Umfang der Kühlmitteltemperaturregelung. Sind die Temperaturen im Bereich der Abgasreinigungsanlage 14 zu hoch, so kann die Kühlmitteltemperatur abgesenkt werden, auch wenn lediglich eine Teillast eingefordert ist und die Verbrennungskraftmaschine 10 im Schichtladebetrieb M_{Sch} gefahren wird. Ebenso ist die Kühlmitteltemperatur abzusenken, wenn die Umgebungstemperatur T_{Um} hoch, insbesondere ≥ 30 °C, ist. Dies ist insofern notwendig, als dass auf diese Weise eine Klopfneigung der Verbrennungskraftmaschine 10 wirkungsvoll gemindert werden kann.

Die Anzahl der Parameter, die während der Ermittlung der Solltemperatur _{TKühl,soll} für das Kühlmittel berücksichtigt werden müssen, hängt, wie dargestellt, von der Konfiguration der Verbrennungskraftmaschine 10 ab. Prinzipiell sind allerdings zwei Parameter bei direkteinspritzenden Verbrennungskraftmaschinen 10 immer zu berücksichtigen, nämlich die Drehzahl n und die Last p. Ist eine Abgasreinigungsanlage 14 vorhanden, so hat zusätzlich deren Temperaturprofil in gewissen Grenzen Einfluss auf die Kühlmitteltemperaturregelung. Ist zusätzlich oder alternativ dazu vorgesehen, dass die Verbrennungskraftmaschine 10 unter verschiedenen Betriebsarten, insbesondere dem Schichtladebetrieb M_{Sch}, gefahren werden kann, so kann dies gesondert bei der Regelung der Kühlmitteltemperatur berücksichtigt werden.

### BEZUGSZEICHENLISTE

- 10: Verbrennungskraftmaschine
- 12: Abgasstrang
- 14: Abgasreinigungsanlage
- 16: Vorkatalysator
- 18: NOₓ-Speicherkatalysator
- 20: Lambdasonde
- 22: Lambdasonde
- 24: Temperaturfühler
- 26: Temperaturfühler
- 28: Drosselklappe
- 30: Ansaugkanal
- 32: Motorsteuergerät
- 34: Motorkühlung
- 36: Steuereinheit

- M_{Sch}: Schichtladebetrieb
- T_{Kühl,soll}: Solltemperatur für das Kühlmittel
- T_{Um}: Umgebungstemperatur
- M_{Hom}: homogener Betrieb
- T_{Kat}: Katalysatortemperaturen
- T_{Ab}: Abgastemperaturen
- T_{Sp}: Temperaturen der Speicherkomponenten
- n: Drehzahl
- p: Last
- UG: Umschaltgrenze

## Patentansprüche

1. Verfahren zur Kühlmitteltemperaturregelung einer Motorkühlung (34) für eine direkteinspritzende Verbrennungskraftmaschine (10), wobei die Kühlmitteltemperatur in Abhängigkeit von einer Last (p) und/oder einer Drehzahl (n) der Verbrennungskraftmaschine (10) geregelt wird, **dadurch gekennzeichnet, dass** in Teillastphasen mit niedriger Last (p) und/oder mit niedrigen Drehzahlen (n) die Kühlmitteltemperatur auf Werte von ≥102°C angehoben wird.

2. Verfahren nach Anspruch 1, **dadurch gekennzeichnet, dass** in den Teillastphasen die Kühlmitteltemperatur auf Werte von ≥ 105°C, insbesondere von ≥ 108°C, angehoben wird.

3. Verfahren nach einem der Ansprüche 1 oder 2, **dadurch gekennzeichnet, dass** die Kühlmitteltemperatur zusätzlich in Abhängigkeit von einem Temperaturprofil einer Abgasreinigungsanlage (14) geregelt wird.

4. Verfahren nach Anspruch 3, **dadurch gekennzeichnet, dass** das Temperaturprofil die Temperaturen von Abgas, Katalysatoren, Schadstoffspeichern, Sensoren und dergleichen umfasst.

5. Verfahren nach den Ansprüchen 3 oder 4, **dadurch gekennzeichnet, dass** die Kühlmitteltemperatur bei hohen Temperaturen in der Abgasreinigungsanlage (14) erniedrigt wird.

6. Verfahren nach einem der Ansprüche 1 bis 5, **dadurch gekennzeichnet, dass** die Kühlmitteltemperatur zusätzlich in Abhängigkeit von einer Umgebungstemperatur (T_{Um}) geregelt wird.

7. Verfahren nach Anspruch 6, **dadurch gekennzeichnet, dass** die Kühlmitteltemperatur bei hohen Umgebungstemperaturen (T_{Um}), insbesondere Temperaturen ≥ 30°C, erniedrigt wird.

8. Verfahren nach einem der Ansprüche 1 bis 7, **dadurch gekennzeichnet, dass** die Kühlmitteltemperatur zusätzlich in Abhängigkeit von einer Betriebsart der Verbrennungskraftmaschine (10) geregelt wird.

9. Verfahren nach Anspruch 8, **dadurch gekennzeichnet, dass** die Verbrennungskraftmaschine (10) magerlauffähig ist und die Betriebsarten der Verbrennungskraftmaschine (10) einen Homogenbetrieb (M_{Hom}) und einen Schichtladebetrieb (M_{Sch}) umfassen.

10. Verfahren nach Anspruch 9, **dadurch gekennzeichnet, dass** die Kühlmitteltemperatur im Schichtladebetrieb (M_{Sch}) erhöht wird.

11. Verfahren nach einem der Ansprüche 1 bis 10, **dadurch gekennzeichnet, dass** die Kühlmitteltemperaturregelung anhand eines Kennfeldes erfolgt, das Parameter umfasst, wie Betriebsart und Drehzahl (n) der Verbrennungskraftmaschine (10), Last (p), Temperaturprofil der Abgasreinigungsanlage (14) und Umgebungstemperatur (T_{Um}).

12. Direkteinspritzende Verbrennungskraftmaschine (10) mit kühlmittelbetriebener Motorkühlung (34), wobei die Motorkühlung (34) eine Steuereinheit (36) zur Kühlmitteltemperaturregelung umfasst, mit der eine Kühlmitteltemperatur in Abhängigkeit von einer Last (p) und/oder einer Drehzahl (n) der Verbrennungskraftmaschine (10) regelbar ist, **dadurch gekennzeichnet, dass** die Steuereinheit (36) in Teillastphasen mit niedriger Last (p) und/oder mit niedrigen Drehzahlen (n) die Kühlmitteltemperatur auf Werte von ≥ 102°C anhebt.

13. Verbrennungskraftmaschine nach Anspruch 12, **dadurch gekennzeichnet, dass** die Verbrennungskraftmaschine (10) magerlauffähig ist.

14. Verbrennungskraftmaschine nach Anspruch 13, **dadurch gekennzeichnet, dass** die Verbrennungskraftmaschine (10) unter verschiedenen Betriebsarten, insbesondere einem Schichtladebetrieb (M_{Sch}) und einem Homogenbetrieb (M_{Hom}), lauffähig ist.

15. Verbrennungskraftmaschine nach einem der Ansprüche 12 bis 14, **dadurch gekennzeichnet, dass** die Motorkühlung (34) zusätzlich in Abhängigkeit von einem oder mehreren Parametern, wie einem Temperaturprofil einer Abgasreinigungsanlage (14), der Betriebsart und Drehzahl (n) der Verbrennungskraftmaschine (10) und einer Umgebungstemperatur (T_{Um}) regelbar ist.

## Claims

1. Method for controlling the coolant temperature of an engine cooling system (34) for a direct-injection internal combustion engine (10), in which the coolant temperature is controlled as a function of a load (p) and/or a rotational speed (n) of the internal combustion engine (10), **characterized in that** in part-load phases with a low load (p) and/or with low engine speeds (n) the coolant temperature is raised to values of ≥ 102°C.

2. Method according to Claim 1, **characterized in that** in the part-load phases the coolant temperature is raised to values of ≥ 105°C, in particular of ≥ 108°C.

3. Method according to either of Claims 1 and 2, **characterized in that** the coolant temperature is additionally controlled as a function of a temperature profile of an exhaust-gas purification system (14).

4. Method according to Claim 3, **characterized in that** the temperature profile comprises the temperatures of exhaust gas, catalytic converters, pollutant accumulators, sensors and the like.

5. Method according to Claim 3 or 4, **characterized in that** the coolant temperature is lowered in the event of high temperatures in the exhaust-gas purification system (14).

6. Method according to one of Claims 1 to 5, **characterized in that** the coolant temperature is additionally controlled as a function of an ambient temperature (T_{Um}) .

7. Method according to Claim 6, **characterized in that** the coolant temperature is lowered in the event of high ambient temperatures (T_{Um}), in particular temperatures ≥ 30°C.

8. Method according to one of Claims 1 to 7, **characterized in that** the coolant temperature is additionally controlled as a function of an operating mode of the internal combustion engine (10).

9. Method according to Claim 8, **characterized in that** the internal combustion engine (10) is capable of running in lean-burn mode, and the operating modes of the internal combustion engine (10) comprise a homogenous mode (M_{Hom}) and a stratified charge mode (M_{Sch}) .

10. Method according to Claim 9, **characterized in that** the coolant temperature is increased in the stratified charge mode (M_{Sch}).

11. Method according to one of Claims 1 to 10, **characterized in that** the coolant temperature control takes place on the basis of an engine map comprising parameters such as operating mode and rotational speed (n) of the internal combustion engine (10), load (p), temperature profile of the exhaust-gas purification system (14) and ambient temperature (T_{Um}) .

12. Direct-injection internal combustion engine (10) with coolant-operated engine cooling system (34), the engine cooling system (34) comprising a control unit (36) for coolant temperature control, which can be used to control a coolant temperature as a function of a load (p) and/or a rotational speed (n) of the internal combustion engine (10), **characterized in that** the control unit (36) raises the coolant temperature to values of ≥ 102°C in part-load phases with a low load (p) and/or with low engine speeds (n).

13. Internal combustion engine according to Claim 12, **characterized in that** the internal combustion engine (10) is capable of running in lean-burn mode.

14. Internal combustion engine according to Claim 13, **characterized in that** the internal combustion engine (10) is capable of running in different operating modes, in particular a stratified charge mode (M_{Sch}) and a homogenous mode (M_{Hom}).

15. Internal combustion engine according to one of Claims 12 to 14, **characterized in that** the engine cooling system (34) can additionally be controlled as a function of one or more parameters, such as a temperature profile of an exhaust-gas purification system (14), the operating mode and rotational speed (n) of the internal combustion engine (10) and an ambient temperature (T_{Um}) .

## Revendications

1. Procédé de régulation de la température d'un liquide de refroidissement d'un système de refroidissement de moteur (34) pour un moteur à combustion interne à injection directe (10), la température du liquide de refroidissement étant régulée en fonction d'une charge (p) et/ou d'une vitesse de rotation (n) du moteur à combustion interne (10), **caractérisé en ce que** dans les phases de charge partielle à faible charge (p) et/ou à faible vitesse de rotation (n), la température du liquide de refroidissement est relevée à des valeurs ≥ 102 °C.

2. Procédé selon la revendication 1, **caractérisé en ce que** dans les phases de charge partielle, la température du liquide de refroidissement est relevée à des valeurs ≥ 105 °C, notamment ≥ 108 °C.

3. Procédé selon la revendication 1 ou 2, **caractérisé en ce que** la température du liquide de refroidissement est en plus régulée en fonction d'un profil de température d'un équipement d'épuration des gaz d'échappement (14).

4. Procédé selon la revendication 3, **caractérisé en ce que** le profil de température comprend les températures des gaz d'échappement, des catalyseurs, d'accumulateurs de substances toxiques, des capteurs et similaires.

5. Procédé selon les revendications 3 ou 4, **caractérisé en ce que** la température du liquide de refroidissement est réduite en présence de températures élevées dans l'équipement d'épuration des gaz d'échappement (14).

6. Procédé selon l'une des revendications 1 à 5, **caractérisé en ce que** la température du liquide de refroidissement est en plus régulée en fonction d'une température ambiante (T_{Um}).

7. Procédé selon la revendication 6, **caractérisé en ce que** la température du liquide de refroidissement est réduite en présence de températures ambiantes (T_{Um}) élevées, notamment de températures ≥ 30 °C.

8. Procédé selon l'une des revendications 1 à 7, **caractérisé en ce que** la température du liquide de refroidissement est en plus régulée en fonction d'un mode de fonctionnement du moteur à combustion interne (10).

9. Procédé selon la revendication 8, **caractérisé en ce que** le moteur à combustion interne (10) peut fonctionner à un régime maigre et les modes de fonctionnement du moteur à combustion interne (10) comprennent un mode homogène (M_{Hom}) et un mode charge stratifiée (M_{Sch}).

10. Procédé selon la revendication 9, **caractérisé en ce que** la température du liquide de refroidissement en mode charge stratifiée (M_{Sch}) est relevée.

11. Procédé selon l'une des revendications 1 à 10, **caractérisé en ce que** la régulation de la température du liquide de refroidissement est réalisée au moyen d'un diagramme caractéristique qui comprend des paramètres tels que le mode de fonctionnement et la vitesse de rotation (n) du moteur à combustion interne (10), la charge (p), le profil de température de l'équipement d'épuration des gaz d'échappement (14) et la température ambiante (T_{Um}).

12. Moteur à combustion interne à injection directe (10) avec un système de refroidissement de moteur (34) fonctionnant par liquide de refroidissement, le système de refroidissement de moteur (34) comprenant une unité de commande (36) pour la régulation de la température du liquide de refroidissement avec laquelle une température du liquide de refroidissement peut être régulée en fonction d'une charge (p) et/ou d'une vitesse de rotation (n) du moteur à combustion interne (10), **caractérisé en ce que** l'unité de commande (36), dans les phases de charge partielle à faible charge (p) et/ou à faible vitesse de rotation (n), relève la température du liquide de refroidissement à des valeurs ≥ 102 °C.

13. Moteur à combustion interne selon la revendication 12, **caractérisé en ce que** le moteur à combustion interne (10) peut fonctionner à un régime maigre.

14. Moteur à combustion interne selon la revendication 13, **caractérisé en ce que** le moteur à combustion interne (10) peut fonctionner sous différents modes de fonctionnement, notamment un mode charge stratifiée (M_{Sch}) et un mode homogène (M_{Hom}).

15. Moteur à combustion interne selon l'une des revendications 12 à 14, **caractérisé en ce que** le système de refroidissement de moteur (34) peut en plus être régulé en fonction d'un ou de plusieurs paramètres tels qu'un profil de température d'un équipement d'épuration des gaz d'échappement (14), du mode de fonctionnement et de la vitesse de rotation (n) du moteur à combustion interne (10) et d'une température ambiante (T_{Um}).
